# EUROPÄISCHE PATENTSCHRIFT

(11) **EP 1 190 894 B1**
(45) Veröffentlichungstag und Bekanntmachung des Hinweises auf die Patenterteilung: **17.08.2005**
(21) Anmeldenummer: 01109315.0
(22) Anmeldetag: 11.04.2001
(51) Int. Cl.: B60N 2/64, B60N 2/68

(54) **Rückenlehne eines Kraftfahrzeugsitzes mit einem Rückenlehnenrahmen als Blechpressteil**
Backrest for automotive vehicle seats with a frame formed as a pressed sheet
Dossier pour siège de véhicule automobile avec une armature en forme d'une tôle pressée

(30) Priorität: 30.08.2000 DE 10042850
(43) Veröffentlichungstag der Anmeldung: 27.03.2002
(73) Patentinhaber: C.Rob. Hammerstein GmbH & Co.KG, 42699 Solingen (DE)
(72) Erfinder: Becker, Burckhard, 42655 Solingen (DE); Houston, Robert, 42799 Leichlingen (DE); Strenger, Martin, 44866 Bochum (DE)
(74) Vertreter: Bauer, Wulf, Dr.

(56) Entgegenhaltungen:
- EP-A- 0 233 822
- DE-A- 3 239 292
- DE-A- 4 402 864
- DE-A- 4 419 139
- DE-A- 19 746 234
- DE-C- 3 936 418

## Beschreibung

Die Erfindung bezieht sich auf eine Rückenlehne eines Kraftfahrzeugsitzes, mit einem Rückenlehnenrahmen, der aus einem Blechzuschnitt zu einem Blechpressteil geformt ist und einen Hauptbereich sowie einen quer zu diesem Hauptbereich verlaufenden Rand aufweist, welcher Rand aus ineinander übergehenden Teilstücken zusammengesetzt ist, nämlich aus einem Toprand, einem linken und einem rechten gekrümmten Eckrand und einem linken und einem rechten Seitenrand (s. zum Beispiel EP-A-0 233 822).

Kraftfahrzeugsitze mit Rückenlehnen, die einen Rückenlehnenrahmen haben, der als Blechpressteil ausgebildet ist, sind allgemein bekannt. Ein Blechpressteil lässt sich insbesondere in der Grosserienfertigung günstig realisieren, sehr präzise fertigen, die Fertigung lässt sich weitgehend automatisieren.

Der Rückenlehnenrahmen gibt einer Rückenlehne die mechanische Festigkeit. Der Rückenlehnenrahmen trägt insbesondere die Polsterteile der Rückenlehne und im allgemeinen auch eine Kopfstütze. Er ist im allgemeinen an einem Untergestell des Kraftfahrzeugsitzes dreheinstellbar angelenkt. Bei unfallbedingter Belastung, insbesondere bei einem Heckaufprall, muss er hohe Beschleunigungskräfte aufnehmen können, die von einem auf dem Kraftfahrzeugsitz befindlichen Passagier ausgeübt werden. Bei einer Rückenlehne für einen Gurtintegralsitz muss die Rückenlehne auch bei Frontaufprallunfällen hohe unfallbedingte Kräfte aufnehmen können.

Diesbezüglich ist eine weitere, aus der DE-A-32 39 292 bekannten Rückenzehne zu erwähnen, die zur Aufnahme hoher unfallbedingter Kräfte u.a. Versteifungssicken im oberen Bereich des jeweiligen Seitenrandes (s. zum Beispiel die Figur 9) aufweist.

Hier setzt nun die Erfindung ein. Sie hat es sich zur Aufgabe gemacht, bei einer Rückenlehne den Rückenlehnenrahmen so weiterzubilden, dass er besonders gut hohe, unfallbedingte Beschleunigungskräfte aufnehmen kann, wie sie insbesondere bei Heckaufprallunfällen auftreten.

Ausgehend von der Rückenlehne der eingangs genannten Art wird diese Aufgabe dadurch gelöst, dass eine linke und eine rechte, versteifende Sicke vorgesehen ist, die sich jeweils in einem oberen Endbereich des Seitenrandes und im Hauptbereich a) im unmittelbar an diesen oberen Endbereich angrenzenden Teilstück des Hauptbereichs und b) in der Nachbarschaft des zugehörigen Eckrandes befindet.

Durch diese Sicke wird der Rückenlehnenrahmen vorteilhafterweise so verstärkt, dass er auch hohe Kräfte aufnehmen kann. Die Sicke ist einfach zu fertigen, sie benötigt keine zusätzlichen Bauteile, sondern lediglich spezielle Vorkehrungen in der Pressform. Durch die Sicke wird das Material des Rückenlehnenrahmens intelligent ausgenutzt. Es wird ein erheblicher Festigkeitszuwachs erreicht.

In einer bevorzugten Ausführung bildet die Sicke zwischen dem oberen Endbereich des jeweiligen Seitenrandes und dem unmittelbar benachbarten Teilstück des Hauptbereichs eine Sickenkante aus, die versetzt verläuft gegenüber einer Kante zwischen Eckrand und Hauptbereich und einer Kante zwischen Hauptbereich und Seitenrand unterhalb des oberen Endbereichs des Seitenrandes. Diese Sickenkante verläuft also versetzt zur normalen Kante im Übergang zwischen Hauptbereich und Seitenrand. Hierdurch erhält der Rückenlehnenrahmen eine grössere Festigkeit.

In einer weiteren bevorzugten Ausführung ist in der Sicke das Blechpressteil so verformt, dass es im Hauptbereich in der Richtung versetzt ist, in der auch der Rand vorspringt und dass es im Bereich des Randes nach innen versetzt ist. Dadurch werden die Aussenkonturen des Rückenlehnenrahmens durch die Sicke nicht beeinflusst. Die Sicke befindet sich vielmehr innerhalb des Volumens, das von den Konturen des unversickten Rückenlehnenrahmens begrenzt wird.

In einer bevorzugten Ausführung befindet sich zwischen Eckrand und Sicke ein ungestörter, bogenförmiger Streifen des Hauptbereichs. Die Sicke hat sich bei dieser Ausbildung als besonders wirksam erwiesen. Sie versteift den Hauptbereich in Nähe des Eckrandes, ohne aber tatsächlich sich bis zur Kante zu erstrecken, wo der Eckrand beginnt. Vielmehr bleibt hier noch der bogenförmige Streifen frei, der recht schmal sein kann, dessen Breite beispielsweise nur wenige Millimeter bis maximal 30 mm beträgt. Dabei ist es vorteilhaft, diesen ungestörten, bogenförmigen Streifen zum oberen, freien Ende der Sicke hin breiter werden zu lassen. Dies insbesondere am Toprand.

In einer bevorzugten Ausführung ist der Blechzuschnitt in der Sicke um etwa 3 bis 30 mm, vorzugsweise um etwa 12 - 18 mm gegenüber dem ungestörten Blechzuschnitt sowie dem ungestörten Rand versetzt. Eine derartige Ausformung gibt den erwünschten Festigkeitszuwachs, ohne dass grosse Umformungen notwendig wären.

In einer bevorzugten Ausführung hat die Sicke in einer Richtung quer zum Toprand, also von oben nach unten, eine Längenausdehnung, die etwa doppelt so gross ist wie die Länge des oberen Endbereiches des Seitenrandes. Die Sicke erstreckt sich damit etwa bis in Nähe des Toprandes, ohne aber mit diesem Toprand in Berührung zu kommen.

In einer bevorzugten Ausführung ist jeweils unterhalb der besprochenen Sicke zusätzlich eine Seitensicke vorgesehen, die sich im Abstand von der besprochenen Sicke befindet und die im Seitenrand und in einem angrenzenden Teilstück des Hauptbereichs ausgebildet ist. Diese Seitensicke bewirkt eine zusätzliche Versteifung. Sie erstreckt sich vorzugsweise in Richtung quer zum Toprand über eine Strecke, die etwa der entsprechenden Abmessung der besprochenen Sicke entspricht.

Weitere Vorteile und Merkmale der Erfindung ergeben sich aus den übrigen Ansprüchen sowie der nun folgenden, nicht einschränkend zu verstehenden Beschreibung eines Ausführungsbeispiels der Erfindung, das im folgenden unter Bezugnahme auf die Zeichnung näher erläutert wird. In dieser Zeichnung zeigen:
- Fig. 1:: eine perspektivische Darstellung eines Rückenlehnenrahmens nach der Erfindung,

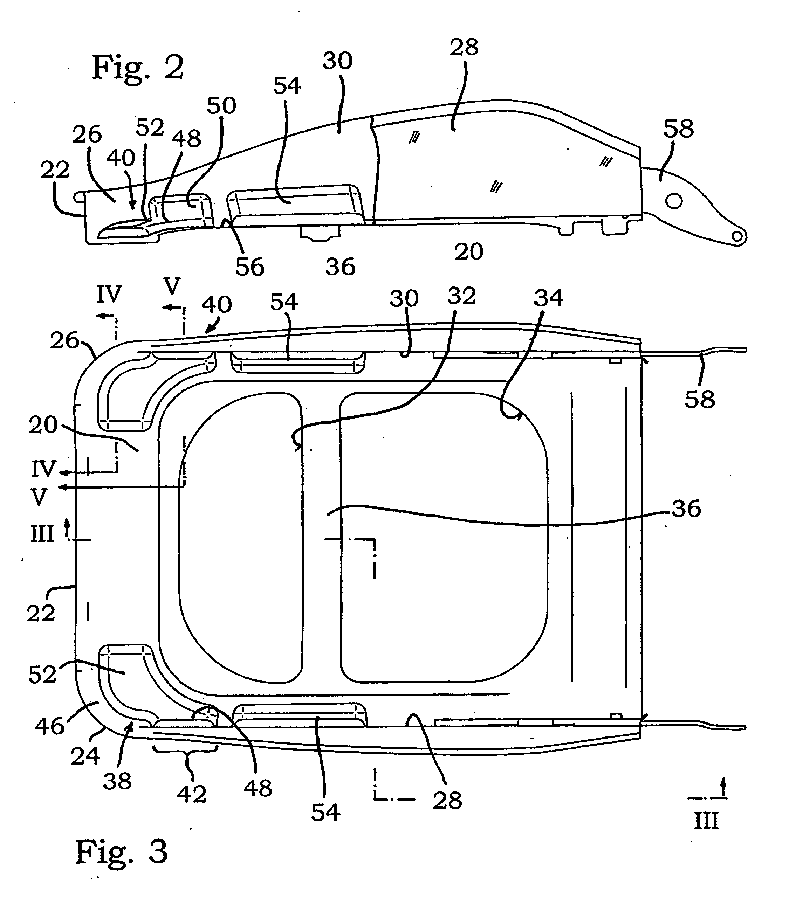

- Fig. 2:: einen Schnitt des Rückenlehnenrahmens entlang der Schnittlinie II - II in Figur 3
- Fig. 3:: eine Draufsicht auf den Rückenlehnenrahmen,

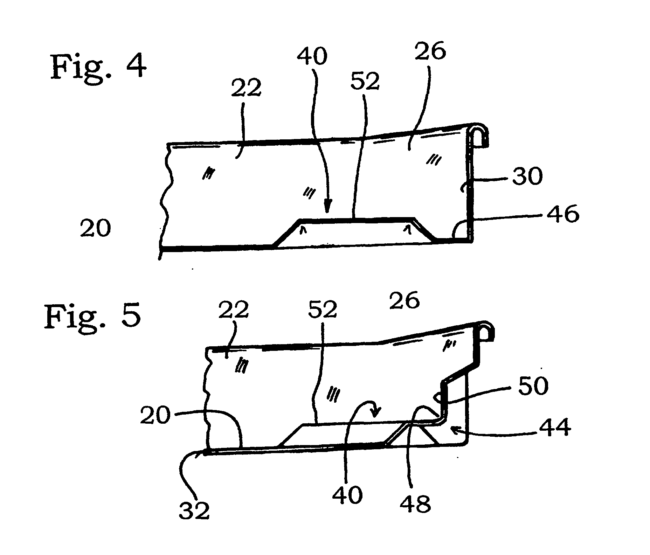

- Fig. 4:: ein Schnitt entlang der Schnittlinie IV-IV in Fig. 3 und
- Fig. 5:: ein Schnitt entlang der Schnittlinie V-V in Fig. 3.

Der in den Figuren dargestellte Rückenlehnenrahmen stellt die Tragstruktur einer Rückenlehne eines Kraftfahrzeugsitzes dar. Der Rückenlehnenrahmen ist aus einem Blechzuschnitt durch einen plastischen Formvorgang hergestellt. Das Ergebnis wird als Blechpressteil bezeichnet.

Dieses Blechpressteil hat einen Hauptbereich 20 und einen Rand. Der Rand läuft etwa U-förmig um. Er setzt sich einstückig zusammen aus einem Toprand 22, einem linken gekrümmten Eckrand 24, einem rechten gekrümmten Eckrand 26, einem linken Seitenrand 28 und einem rechten Seitenrand 30.

Im Hauptbereich sind zwei grosse Ausschnitte 32 vorgesehen, nämlich ein oberer Ausschnitt 32 und ein unterer Ausschnitt 34. Sie sind durch einen querlaufenden Steg 36 getrennt, dieser Steg ist profiliert. Das Blechpressteil ist im wesentlichen spiegelsymmetrisch zu einer Mittelebene 37.

Im oberen Bereich des Blechpressteils sind zwei Sicken angeordnet, auf die im folgenden näher eingegangen wird. Es handelt sich um eine linke versteifende Sicke 38 und eine baugleiche, rechte Sicke 40. Im folgenden wird die linke Sicke 38 beschrieben, für die rechte Sicke 40 gilt entsprechendes.

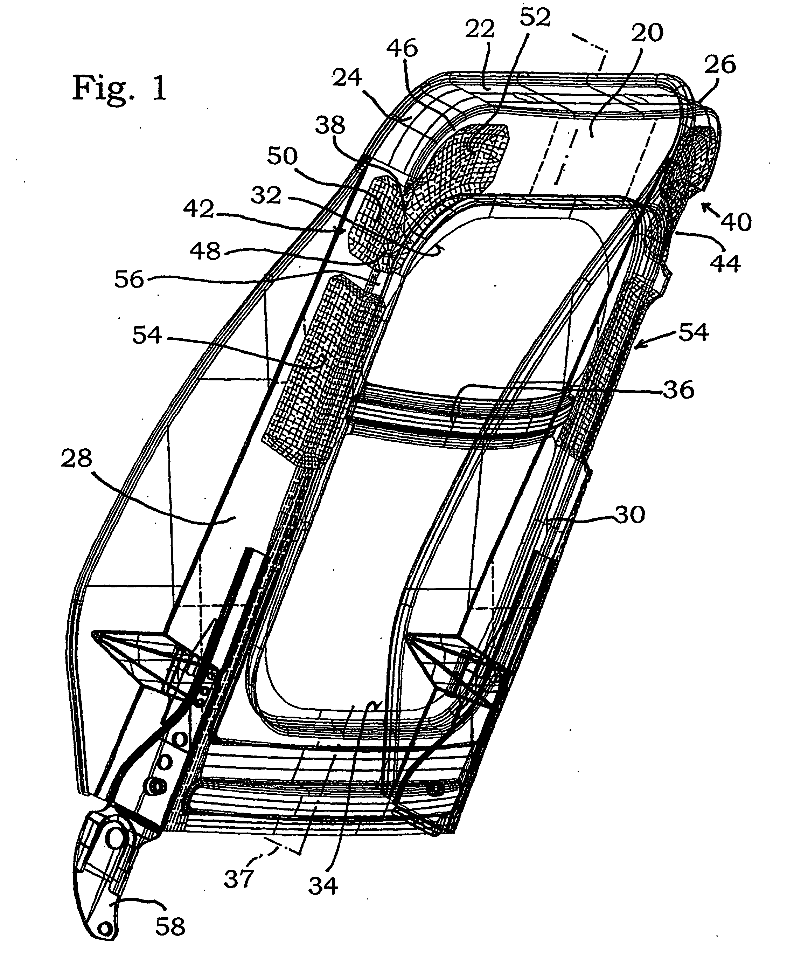

Die Sicke 38 befindet sich einerseits im Seitenrand 28, nämlich in einem oberen Endbereich 42 dieses Seitenrandes 28 und andererseits im Hauptbereich 20. Der obere Endbereich 42 ist ein kürzeres Stück des gesamten Seitenrandes 28, er erstreckt sich etwa über 1/8-tel der Gesamtlänge des Seitenrandes 28. Er beginnt etwas unterhalb des Übergangs des linken Seitenrandes 28 in den linken Eckrand 24, insbesondere in Figur 1 ist der Abstand, der einige Millimeter beträgt, zu erkennen.

Im oberen Endbereich 42 verläuft die Sicke 38 in den Hauptbereich 20 hinein, dadurch kommt es zu einer Einwölbung 44, die am rechten Rand von Figur 1 sichtbar ist.

Im Hauptbereich 20 befindet sich also in dem unmittelbar an dem oberen Endbereich angrenzenden Teilstück des Hauptbereichs ein erstes Hauptbereichsteil der Sicke. Ein zweites Hauptbereichsteil der Sicke befindet sich unmittelbar anschliessend über diesen ersten Hauptbereichsteil und in Nachbarschaft des zugehörigen Eckrandes, also des linken Eckrandes 24. Dieses zweite Hauptbereichsteil hat aber keine Berührung mit dem Rand, sondern befindet sich ausschliesslich im Hauptbereich. Es ist vom benachbarten Eckrand 24 durch einen ungestörten, bogenförmigen Streifen 46 des Hauptbereichs 20 getrennt. Dabei folgen die Ränder der Sicke 38 einerseits der Krümmung des Eckrandes und andererseits der Krümmung des oberen Ausschnittes 32. Darüberhinaus ist die Sicke 38 zur Symmetrieebene des Rückenlehnenrahmens hin abgeschlossen durch einen hierzu parallelen Verlauf. Im linken Seitenrand hat die Sicke 28 im wesentlichen Begrenzungslinien, die entweder parallel zur Symmetrieebene oder im wesentlichen quer hierzu verlaufen.

Die Sicke hat eine Sickenkante 48, die parallel versetzt verläuft zu einer Kante zwischen dem Seitenrand 28 und dem Hauptbereich 20. Sie hat weiterhin eine erste Sickenfläche 50 im Bereich des oberen Endbereichs, diese erste Sickenfläche 50 befindet sich in einer Ebene, die parallel versetzt ist zur Ebene des linken Seitenrandes 28. Sie hat weiterhin eine zweite Sickenfläche 52, die sich in einer Ebene befindet, die parallel versetzt ist zur Ebene des Hauptbereichs um die Sicke 38 herum. Diese zweite Sickenfläche 52 setzt sich aus den beiden o.g. Hauptbereichsteilen zusammen. Die Sicke springt etwa 15 mm gegenüber dem ungestörten Material vor. Genauer gesagt befindet sich die erste Sickenfläche in einem Abstand von etwa 15 mm jenseits des linken Seitenrandes 28. Die zweite Sickenfläche 52 befindet sich im Abstand von etwa 15 mm nach vorn, in der Richtung, in der auch der Seitenrand 28 vorspringt, versetzt gegenüber dem ungestörten Hauptbereich 20. Quer zur Symmetrieebene erstreckt sich jede Sicke 38, 40 über etwa 20 % der Querabmessung des Blechpressteils. Die erste Sickenfläche 50 ist im wesentlichen ein Rechteck. Die zweite Sickenfläche 52 hat dagegen eine kompliziertere Form.

Die Sicke 28 erstreckt sich nicht über die gesamte Höhe des Seitenrandes 28, vielmehr endet sie im Abstand vom freien Ende des Seitenrandes. Sie erstreckt sich dabei über mehr als die Hälfte, insbesondere zwischen 60 und 80 % der Höhe des Seitenrandes 28. Am freien Ende ist der Seitenrand nach aussen U-förmig umgebogen. Dort befindet sich eine Randleiste.

Es ist noch jeweils eine linke und eine rechte Seitensicke 54 vorgesehen. Im folgenden wird wiederum die linke Seitensicke 54 beschrieben, die baugleich ist mit der rechten Seitensicke. Sie befindet sich im geringen Abstand unterhalb der Sicke 28, zwischen beiden ist ein ungestörter Bereich 56. Dieser ist etwa 15 bis 20 mm hoch. Die Seitensicke hat quer zum Toprand 22 eine Längenabmessung, die in etwa der entsprechenden Abmessung der linken Sicke 38 entspricht. Sie ist auch um ein gleiches Mass, also etwa 15 mm, aus dem ungestörten Blechmaterial herausgeformt. Die Seitensicke 54 hat im Bereich des linken Seitenrandes 28 eine Sickenfläche, die etwa rechteckig ist, jedenfalls die Form eines länglichen Rechteckes hat. Im Hauptbereich 20 ist die Seitensicke 54 relativ klein, sie erstreckt sich hier etwa über 20 bis 30 mm, dies entspricht etwa der Breite der Sicke 28 in ihrem untersten Teilstück.

Die Seitensicke 54 schliesst unten etwa mit der unteren Kante des Steges 36 ab. Die Seitensicke 54 befindet sich im Bereich der oberen Hälfte des Seitenrandes 28. Ihre Sickenkante verläuft in Verlängerung der Sickenkante 48.

Am unteren Ende beider Seitenränder 28, 30 sind jeweils längliche Tragbleche auf die Innenfläche des Seitenrandes 28 bzw. 30 aufgebracht. Sie begrenzen zusammen mit dieser Innenfläche längliche Taschen. In diese Taschen werden obere Arme 58 von Rückenlehnengelenken, die ansich bekannt sind, eingeschoben und fixiert. Dies ermöglicht eine einfache Steckmontage der schon fertiggestellten, also auch gepolsterten Rückenlehne.

## Patentansprüche

1. Rückenlehne eines Kraftfahrzeugsitzes, mit einem Rückenlehnenrahmen, der aus einem Blechzuschnitt zu einem Blechpressteil geformt ist und einen Hauptbereich (20) sowie einen quer zu diesem Hauptbereich (20) verlaufenden Rand aufweist, welcher Rand aus ineinander übergehenden Teilstücken zusammengesetzt ist, nämlich aus einem Toprand (22), einem linken und einem rechten gekrümmten Eckrand (24, 26) und einem linken und einem rechten Seitenrand (30), **dadurch gekennzeichnet, daß** eine linke und eine rechte, versteifende Sicke (38, 40) vorgesehen ist, die sich jeweils in einem oberen Endbereich (42) des Seitenrandes (28, 30) und im Hauptbereich (20) a) im unmittelbar an diesen oberen Endbereich (42) angrenzenden Teilstück des Hauptbereichs (20) und b) in der Nachbarschaft des zugehörigen Eckrandes (24, 26) befindet.

2. Rückenlehne nach Anspruch 1, **dadurch gekennzeichnet, dass** die Sicke (38, 40) zwischen dem oberen Endbereich (42) des jeweiligen Seitenrandes (28, 30) und dem unmittelbar benachbarten Teilstück des Hauptbereichs (20) eine Sickenkante (48) ausbildet, die versetzt verläuft gegenüber einer Kante zwischen Hauptbereich (20) und Seitenrand unterhalb des oberen Endbereichs (42) des Seitenrandes (28, 30).

3. Rückenlehne nach Anspruch 1, **dadurch gekennzeichnet, dass** in der Sicke (38, 40) das Blechpressteil so verformt ist, dass es im Hauptbereich (20) in der Richtung versetzt ist, in der auch der Rand vorspringt und dass es im Bereich des Seitenrandes (28, 30) nach innen hin versetzt ist.

4. Rückenlehne nach Anspruch 1, **dadurch gekennzeichnet, dass** sich zwischen Eckrand und Sicke (38, 40) ein ungestörter, bogenförmiger Streifen (46) des Hauptbereichs (20) befindet.

5. Rückenlehne nach Anspruch 1, **dadurch gekennzeichnet, dass** der Blechzuschnitt in der Sicke (38, 40) um 3 bis 30 mm, vorzugsweise um fünfzehn Millimeter gegenüber dem ungestörten Blechzuschnitt sowie dem ungestörten Rand versetzt verläuft.

6. Rückenlehne nach Anspruch 1, **dadurch gekennzeichnet, dass** die Sicke (38, 40) in einer Richtung quer zum Toprand (22), also von oben nach unten eine Längsausdehnung hat, die etwa doppelt so groß ist wie die Länge des oberen Endbereichs (42) des Seitenrandes (28, 30).

7. Rückenlehne nach Anspruch 1, **dadurch gekennzeichnet, dass** der Rand ein freies Randende hat und dass dieses freie Randende sich außerhalb der Sicke (38, 40) befindet.

8. Rückenlehne nach Anspruch 1, **dadurch gekennzeichnet, dass** die Sicke (38, 40) an den Eckrand (24, 26) angrenzt, sich aber nicht in den Eckrand (24, 26) erstreckt.

9. Rückenlehne nach Anspruch 1, **dadurch gekennzeichnet, dass** jeweils links und rechts unterhalb der Sicke (38, 40) eine Seitensicke (54) vorgesehen ist, die sich im Abstand von der Sicke (38, 40) befindet und die im Seitenrand (28, 30) und in einem angrenzenden Teilstück des Hauptbereichs (20) ausgebildet ist.

10. Rückenlehne nach Anspruch 1, **dadurch gekennzeichnet, dass** der Rand an seinem freien Ende unter Bildung einer Randleiste nach aussen zurückgebogen ist.

11. Rückenlehne nach Anspruch 10, **dadurch gekennzeichnet, dass** der Rand ein freies Randende hat und dass sich dieses freie Randende außerhalb der Seitensicke (54) befindet.

12. Rückenlehne nach Anspruch 9, **dadurch gekennzeichnet, dass** sich die Seitensicke (54) im Bereich der oberen Hälfte des Seitenrandes (28, 30) befindet.

## Claims

1. A seat back of a vehicle seat with a seat back frame that has been formed out of a sheet iron blank into a pressed piece of sheet iron and that is provided with a main region (20) as well as with a border oriented transversely to said main region (20), said border being composed of merging portions, viz., of a top border (22), a left and a right bent corner border (24, 26) and a left and a right lateral border (30), **characterized in that** there is provided a left and a right stiffening bead (38, 40), each of which being located in an upper end region (42) of the lateral border (28, 30) and in the main region (20) a) in the portion of the main region (20) that is directly adjacent said upper end region (42) and b) in the neighborhood of the corresponding corner border (24, 26).

2. A seat back according to claim 1, **characterized in that** the bead (38, 40) forms a bead edge (48) between the upper end region (42) of each lateral border (28, 30) and the directly adjacent portion of the main region (20), said bead edge being oriented offset with respect to an edge between the main region (20) and the lateral border underneath the upper end region (42) of the lateral border (28, 30).

3. A seat back according to claim 1, **characterized in that** the pressed piece in the bead (38, 40) is deformed in such a manner that it is offset in the main region (20) in the same direction in which the border protrudes and that it is inwardly offset in the region of the lateral border (28, 30).

4. A seat back according to claim 1, **characterized in that** an undisturbed, arch-shaped strip (46) of the main region (20) is provided for between the corner border and the bead (38, 40).

5. A seat back according to claim 1, **characterized in that** the sheet iron blank in the bead (38, 40) is offset by 3 to 30 mm, preferably by fifteen mm, relative to the undisturbed sheet iron blank and the undisturbed border.

6. A seat back according to claim 1, **characterized in that** the bead (38, 40) has, in a direction transversal to the top border (22), that is from the top downward, an extension in length which is about double the length of the upper end region (42) of the lateral border (28, 30).

7. A seat back according to claim 1, **characterized in that** the border has a free end, said end of the border being located outside the bead (38, 40).

8. A seat back according to claim 1, **characterized in that** the bead (38, 40) is adjacent the corner border (24, 26) but does not extend into said corner border (24, 26).

9. A seat back according to claim 1, **characterized in that** at the left and the right side respectively underneath the bead (38, 40), there is provided a side bead (54) that is spaced from the bead (38, 40) and that is realized in the lateral border (28, 30) and in an adjacent portion of the main region (20).

10. A seat back according to claim 1, **characterized in that** the free end of the border is bent back outward to form a shoulder.

11. A seat back according to claim 10, **characterized in that** the border has a free end, said free end of the border being located outside the side bead (54).

12. A seat back according to claim 9, **characterized in that** the side bead (54) is located in the region of the upper half of the lateral border (28, 30).

## Revendications

1. Dossier d'un siège de véhicule automobile, avec un cadre de dossier qui est formé à partir d'une pièce découpée en tôle pour obtenir une pièce pressée en tôle et qui présente une zone principale (20) ainsi qu'un bord s'étendant transversalement à cette zone principale (20), ledit bord étant composé de portions qui se confondent, à savoir d'un bord supérieur (22), de bords d'angle courbés gauche et droit (24, 26) et de bords latéraux gauche et droit (30), **caractérisé par le fait que** l'on prévoit une moulure raidisseuse gauche et une moulure raidisseuse droite (38, 40), chacune d'elles étant située dans une zone terminale supérieure (42) du bord latéral (28, 30) et dans la zone principale (20) a) dans la portion de la zone principale (20), qui est directement contiguë à cette zone terminale supérieure (42) et b) au voisinage du bord d'angle (24, 26) associé.

2. Dossier selon la revendication 1, **caractérisé par le fait que** ladite moulure (38, 40) forme une arête de moulure (48) entre la zone terminale supérieure (42) du bord latéral respectif (28, 30) et la portion de la zone principale (20), qui est directement voisine, ladite arête de moulure s'étendant de façon décalée par rapport à une arête entre la zone principale (20) et le bord latéral au-dessous de la zone terminale supérieure (42) du bord latéral (28, 30).

3. Dossier selon la revendication 1, **caractérisé par le fait que**, dans ladite moulure (38, 40), la pièce pressée en tôle est déformée de manière à être décalée dans la zone principale (20) dans la même direction dans laquelle fait saillie le bord et que, dans la zone du bord latéral (28, 30), elle est décalée vers l'intérieur.

4. Dossier selon la revendication 1, **caractérisé par le fait qu'**une bande (46) non dérangée en forme d'arc de la zone principale (20) est située entre le bord d'angle et la moulure (38, 40).

5. Dossier selon la revendication 1, **caractérisé par le fait que**, dans la moulure (38, 40), la pièce découpée en tôle est décalée de 3 à 30 mm, de préférence de quinze millimètres par rapport à la pièce découpée en tôle non dérangée ainsi que par rapport au bord non dérangé.

6. Dossier selon la revendication 1, **caractérisé par le fait que** la moulure (38, 40) présente dans une direction transversale au bord supérieur (22), c'est-à-dire de haut vers le bas, une extension longitudinale qui est à peu près deux fois plus grande que la longueur de la zone terminale supérieure (42) du bord latéral (28, 30).

7. Dossier selon la revendication 1, **caractérisé par le fait que** le bord présente une extrémité libre de bord et que cette extrémité libre du bord est située à l'extérieur de ladite moulure (38, 40).

8. Dossier selon la revendication 1, **caractérisé par le fait que** la moulure (38, 40) est contiguë au bord d'angle (24, 26), mais ne s'étend pas dans le bord d'angle (24, 26).

9. Dossier selon la revendication 1, **caractérisé par le fait que** l'on prévoit respectivement à gauche et à droite au-dessous de la moulure (38, 40) une moulure latérale (54) qui est située à distance de la moulure (38, 40) et qui est réalisée dans le bord latéral (28, 30) et dans une portion adjacente de la zone principale (20).

10. Dossier selon la revendication 1, **caractérisé par le fait que** l'extrémité libre du bord est repliée vers l'extérieur pour former un rebord.

11. Dossier selon la revendication 10, **caractérisé par le fait que** le bord présente une extrémité libre de bord et que cette extrémité libre du bord est située à l'extérieur de la moulure latérale (54).

12. Dossier selon la revendication 9, **caractérisé par le fait que** ladite moulure latérale (54) se trouve dans la zone de la moitié supérieure du bord latéral (28, 30).
